(19) Europäisches Patentamt
European Patent Office
Office européen des brevets

(11) **EP 4 492 297 A1**

(12) **EUROPEAN PATENT APPLICATION**

(43) Date of publication:
**15.01.2025 Bulletin 2025/03**

(21) Application number: 24154282.8

(22) Date of filing: **26.01.2024**

(51) International Patent Classification (IPC):
**G06N 10/40** $^{(2022.01)}$    **G06N 10/60** $^{(2022.01)}$

(52) Cooperative Patent Classification (CPC):
**G06N 10/40; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023 EP 23185599**

(71) Applicant: **Kipu Quantum GmbH
76137 Karlsruhe (DE)**

(72) Inventors:
• **ALVARADO BARRIOS, Gabriel
76137 Karlsruhe (DE)**
• **KUMAR, Shubham
10405 Berlin (DE)**
• **SOLANO, Enrique
10405 Berlin (DE)**

(74) Representative: **Hoppe, Georg Johannes
Darani Anwaltskanzlei
Hohenzollerndamm 117
14199 Berlin (DE)**

(54) **MICROWAVE QUANTUM MEMRISTOR**

(57)    The present invention pertains to a quantum memristor. Specifically, the microwave quantum memristor with at least one superconducting circuit, comprises:
- a first LC resonator, and
- a second LC resonator,
which are
galvanically coupled to each other, and
both coupled to a voltage source via a capacitor,
wherein
- the first LC resonator is grounded via a capacitance, and
- the second LC resonator is grounded via a superconducting quantum interference device (SQUID) for changing the properties of the second LC resonator depending on an external magnetic signal applied to the SQUID which is tuned based on continuous quantum measurements.

EP 4 492 297 A1

## Description

The invention generally relates to quantum computing. Certain embodiments are defined by the appended independent and dependent claims.

The invention relates to a quantum memristor (QM) that can be implemented using superconducting circuits operating in the microwave regime. In particular embodiments, the method is based on engineering the response of the device using microwave pulses based on continuous measurements to obtain a memristive behavior.

The microwave quantum memristor comprises coupled resonators connected to an input voltage bias and galvanically coupled to a SQUID. This architecture facilitates the coupling of multiple microwave quantum memristors, enabling their scaling in 1D and 2D arrays. As such, the quantum memristor of the invention can serve as a building block for quantum neuromorphic architectures, including quantum neural networks, with applications in AI and quantum machine learning.

## Background of the Invention

Quantum computing is a computational paradigm that leverages the principles of quantum mechanics to process information. It mirrors the classical computing model by utilizing quantum versions of gates and bits. However, the scalability of current quantum computers is constrained by the absence of adequate quantum error correction. This limitation has ushered in the era of Noisy Intermediate-Scale Quantum (NISQ) devices. In this era, the focus is on developing quantum algorithms with the potential to outperform classical computers, despite the limited size of today's quantum computers.

Neuromorphic quantum computing (NQC) is the application brain-inspired quantum algorithms on quantum hardware, where quantum properties such as superposition and entanglement can lead to calculation speed ups. The most prominent strategy for implementing NQC methods is the use of parameterized quantum circuits and classical/quantum machine learning to formulate neural networks on quantum processors. This approach is constrained by the limitations of NISQ devices in simulating neuromorphic algorithms. In this context, it is relevant to aim for alternative strategies in which quantum systems can directly implement the information processing required in neuromorphic computing, with the end goal of designing analog quantum neural networks. Quantum memristors are candidates of becoming the units of these neural processes by taking advantage of the dynamics of the system.

To make use of quantum memristors in NQC, it is important to design them in a convenient platform that facilitates their scaling and allows them to control their dynamics effectively. Early demonstrations in superconducting circuits, optical and photonics setups, have shown promising properties related to memory and quantum correlations together with different methods to control their responses. Nonetheless, these proposals are limited by their scalability to design large scale integrated quantum devices.

The present invention provides a scalable quantum memristive device in superconducting circuits whose response can be controlled via microwave driving and that can serve as the building block for quantum neuromorphic architectures such as quantum neural networks.

## Short Description of the Invention

This summary is provided to introduce a selection of concepts in a simplified form that are further described below in the detailed description. This summary is not intended to identify key features of the invention, nor is it intended to be used to limit the scope of the invention.

The objective of the invention is to provide a scalable quantum memristive device.

This objective is achieved by the features of the independent claims in the appended claims. Further embodiments and examples are apparent from the dependent claims, the detailed description, and the accompanying drawings of the figures.

In a first aspect, the invention pertains to a quantum device capable of functioning as a quantum memristor. Specifically, the invention comprises in certain embodiments a superconducting circuit design for a quantum memristive system, in which the memristive response is engineered through flux control based on continuous quantum measurements and can be adjusted using various initial states.

The scalable quantum memristive device functions in certain embodiments as a building block for quantum neuromorphic architecture using superconducting circuits. The response of the device can be controlled via microwave driving (using external flux control), and it can be scaled easily to form arrays while preserving memristive properties and generating quantum entanglement.

A superconducting circuit is an electronic circuit operating below its critical temperature at which the materials it is composed of exhibit vanishing electrical resistance and repulsion of magnetic fields from the material. Superconducting circuits can be composed of circuit elements such as capacitors and inductors, as well as nonlinear devices such as Josephson junctions.

An LC resonator is an electric circuit that consists of a capacitor and an inductor connected in parallel. A resonator may also be referred to as an oscillator.

A capacitor can be a device used to store an electric charge. It consists of one or more pairs of conductors separated by an insulator. Specifically, a capacitor is an electronic device that stores electrical energy in an electric field by accumulating electric charges on two closely spaced surfaces that are insulated from each other.

In certain embodiments, the invention refers to a microwave quantum memristor or to a microwave quantum memristor circuit.

In certain embodiments, the invention refers to a microwave quantum memristor with at least one superconducting circuit, comprising:

- a first LC resonator, and
- a second LC resonator,

which are galvanically coupled to each other, and both coupled to a voltage source via a capacitor.

Put briefly, the second LC resonator serves as an output port and the first LC resonator is used to make measurements. The microwave quantum memristor is connected to an external input voltage source as the input port of the first LC resonator and the second LC resonator. In certain embodiments, the input voltage source is integrated into the memristor.

The microwave character of the memristor arises from the fact that it is implemented in superconducting circuits. Microwave signals are used to manipulate superconducting circuits since quantum devices built with them can only accept quanta of energy in the microwave regime.

Galvanically coupled means that two or more superconducting elements are connected by a direct electrical contact.

In certain embodiments,

- the first LC resonator is grounded via a capacitance, and

- the second LC resonator is grounded via a superconducting quantum interference device (SQUID). The second LC resonator is modified by applying an external magnetic feedback signal to the SQUID, which is tuned based on continuous quantum measurements performed

on the first LC resonator. The SQUID is adapted to receive an external magnetic (feedback) signal to provide tuning to the second LC resonator.

An LC resonator is an electric circuit that consists of a capacitor and an inductor connected in parallel.

In certain embodiments of the microwave quantum memristor, the external magnetic feedback signal is received by the superconducting quantum interference device (SQUID) and is a function of the voltage measured in the first LC resonator.

In certain embodiments of the microwave quantum memristor, the first LC resonator carries out continuous quantum measurements and the second LC resonator functions as an output port for analyzing a response of the memristor, i.e. provides a signal that is analyzed. In particular, the response of the microwave quantum memristor is adjusted by changing the relative phase of an initial state.

In certain embodiments of the microwave quantum memristor, the superconducting quantum interference device (SQUID) is implemented to provide a flux feedback to the second LC resonator which serves as the output port. This is done for tuning the response of the device measured by dynamically varying quantum variables through continuous quantum measurements performed on the first LC resonator that leads to a modification of a quantum Hamiltonian of the memristor.

The superconducting circuit design corresponding to the quantum memristor is characterized and fully described by the Hamiltonian. The Hamiltonian is used to obtain the dynamics of the observables of the system from which the memristive relation that defines the quantum memristor is derived.

In certain embodiments of the microwave quantum memristor, a current in the first LC resonator depends on a variable that is an internal variable for a memristive relation.

A "memristive relation" refers to two time-dependent quantities that can be related by a state-dependent Ohm's law. This means any two observable quantities that obey a relation of the form

$$y(t) = g[x, u, t]u(t), \qquad (1)$$

$$\dot{x} = f[x, u, t]. \qquad (2)$$

where $y(t)$ and $u(t)$ refer to an output and an input signal of a physical system, respectively, and are related through the response function $g[x, u, t]$. The response function also depends on a state variable $x$ whose dynamics is described by an equation that can additionally depend on the input and time.

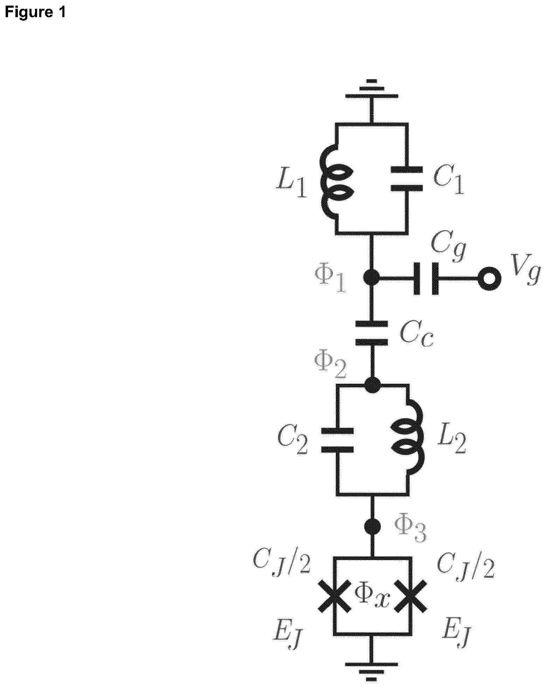

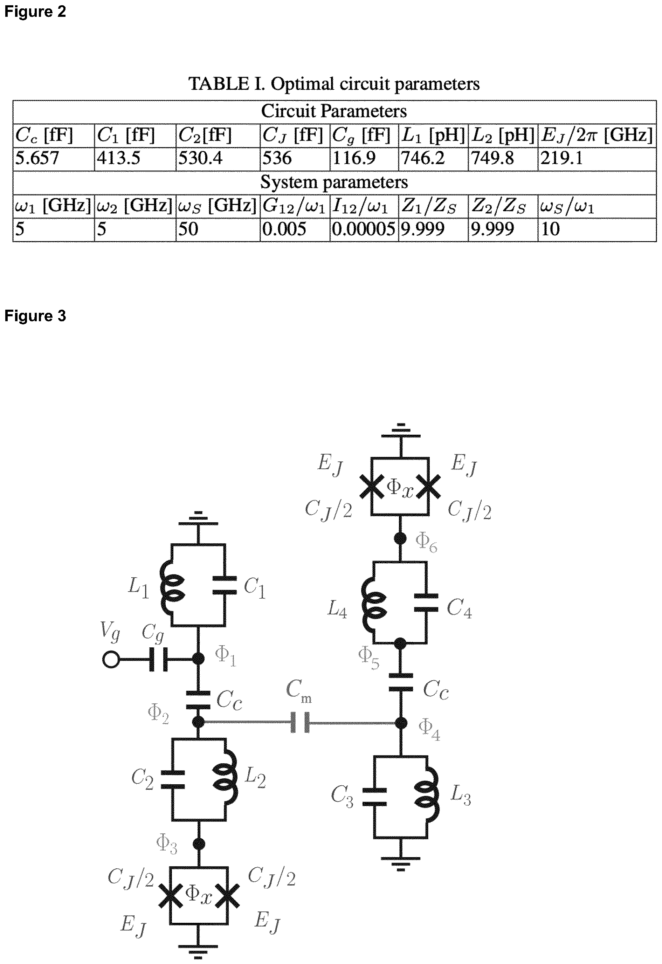

In certain embodiments of the microwave quantum memristor, a current in the first LC resonator depends on a variable (e.g., the magnetic flux at node 3, $\Phi_3$ as seen in figures 1 and 3) which constitutes an internal variable for a memristive relation.

In certain embodiments of the microwave quantum memristor, a continuous quantum feedback is provided based on continuous measurements performed on the first LC resonator through a magnetic flux that is applied to the SQUID, which in turn provides tuning to the second LC resonator.

In certain embodiments of the microwave quantum memristor, the continuous quantum feedback is based on a flux update rule which is a function depending on the dynamics of the first LC resonator's quantum observables. A particular embodiment of a flux update rule is provided in equation 7.

In certain embodiments of the microwave quantum memristor, the continuous quantum feedback is applied through the SQUID after a given time interval on the second LC resonator such that a time interval is smaller than an input voltage oscillation period for tuning the response of the memristor.

In certain embodiments of the microwave quantum memristor, the continuous quantum feedback modifies the circuit's quantum Hamiltonian depending on the measurement value received from the second LC resonator.

In certain embodiments of the microwave quantum memristor, an initial state of the microwave quantum memristor used is chosen from the group consisting of vacuum, superposition, coherent, squeezed, Bell, NOON and cat states such that the response of the memristor can be adjusted, in particular wherein the response of the microwave quantum memristor is adjusted by changing the relative phase of the initial state.

In certain embodiments, the microwave quantum memristor comprises at least two superconducting circuits that are coupled with each other, in particular using superconducting circuit elements such as an inductor and a capacitor, in particular using a coupling capacitor (inductor).

In certain embodiments of the microwave quantum memristor, the at least two superconducting circuits are coupled with each other such that a node of the first superconducting circuit is coupled to a node of the second superconducting circuit. The node of the first superconducting circuit and the node of the second superconducting circuit may be functionally identical.

In certain embodiments of the microwave quantum memristor, the coupling leads to the generation of quantum correlations that can be quantified by using quantum discord, entanglement entropy and/or concurrence. Concurrence is a measure of entanglement defined for a mixed state of two qubits. It is a state invariant involving qubits.

Quantum discord is a measure of nonclassical correlations present between two subsystems within a quantum system. These correlations are quantum physical in nature but do not necessarily correspond to quantum entanglement.

Entanglement entropy is a measure of the degree of quantum entanglement between two subsystems that constitute a bipartite quantum system. The entanglement entropy is the Von Neumann entropy of the reduced density matrix of any of the subsystems of the bipartite system. This quantity can only be calculated for pure states.

In certain embodiments of the microwave quantum memristor, the response of the coupled microwave quantum memristor is adjusted

-   by using an initial state selected from the group consisting of vacuum, superposition, coherent, squeezed coherent, Bell, NOON and cat states and/or

-   by changing the relative phase of the initial state.

The vacuum state refers to the ground state of a quantum harmonic oscillator, in which there are no energy excitations.

A superposition state refers to a quantum state that is a combination of two or more possible states, each with a certain probability amplitude. Once a superposition state is measured, only one of the states that are in the combination will be observed with its corresponding probability. Upon performing repeated measurements, all the states in the combination are observed with their corresponding probability.

A coherent state, $|\alpha\rangle$, is defined as the eigenstate of the annihilation operator $\hat{a}$ satisfying the relation $\hat{a}|\alpha\rangle = \alpha|\alpha\rangle$. It is a state that minimizes the Heisenberg uncertainty relation.

A squeezed coherent state is a coherent state that is squeezed to saturate the Heisenberg uncertainty principle

$\Delta x \, \Delta p = \dfrac{\hbar}{2}$ and is represented by $|\Psi(\alpha,\zeta)\rangle = \hat{S}(\zeta)|\alpha\rangle$ where $|\alpha\rangle$ is a coherent state and $\hat{S}(\xi) = exp\,(\xi\hat{a}^2 - \xi^*(a^\dagger)^2)$ is the

squeezing operator.

A Bell state is a maximally entangled state for two qubits, and it is of the form $|\psi^{+,-}\rangle = \frac{1}{\sqrt{2}}(|0\rangle|0\rangle \pm |1\rangle|1\rangle)$

$$|\phi^{+,-}\rangle = \frac{1}{\sqrt{2}}(|0\rangle|1\rangle \pm |1\rangle|0\rangle)$$

or                    .

A NOON state is a many-body entangled state that represents a superposition of N particles or excitations in mode 'a' with zero particles in mode 'b', and vice versa. In a quantum harmonic oscillator a NOON state is written as

$$|\Psi\rangle = \frac{1}{\sqrt{2}}(|N\rangle|0\rangle + e^{iN\theta}|0\rangle|N\rangle)$$

A cat state is defined as the quantum superposition of two opposite-phase coherent states of a single optical mode.

In certain embodiments, the invention refers to a microwave quantum memristor, wherein a first superconducting circuit (oscillator) is continuously measured to provide a feedback signal onto a second superconducting circuit which also receives an external voltage signal. The feedback signal is used to configure a memristive relation in the second superconducting circuit between the external voltage and the expectation value of either the superconducting phase or the number of cooper pairs.

In certain embodiments, the quantum memristor uses two coupled LC oscillators and a superconducting quantum interference device (SQUID), which can modify the effective frequency of one of the oscillators with an external magnetic flux modifying the dynamics of the other oscillator. The input signal of the device of the invention is an external voltage over one of the resonators, and the output signal is the response of the other resonator. Specifically, one can engineer memristive responses using different initial states, including separable and entangled states.

In a second aspect, the invention refers to a method for providing a memristive relation in a quantum memristor.

Such a method may comprise introducing an external magnetic (feedback) field through a quantum interference device (SQUID) which depends on a current in a first LC resonator, thereby changing an effective frequency of a second resonator which in turn changes the distribution of a voltage signal into the first LC resonator, thereby generating a feedback relation.

In a third aspect, the invention refers to the use of a microwave quantum memristor as described herein in a quantum computer.

In certain embodiments of the use, a coupled architecture (design) of the microwave quantum memristor is implemented, wherein a plurality of microwave quantum memristors are coupled with superconducting circuit elements such as an inductor and/or a capacitor and are arranged in a 1D or a 2D array. In other embodiments, a neuromorphic architecture is implemented.

In a fourth aspect, the invention refers to a method for manufacturing a microwave quantum memristor, in particular a quantum memristor as described herein. The method may comprise:

provide a first LC resonator and a second LC resonator,

wherein

-    the first LC resonator is grounded via a capacitance, and
-    the second LC resonator is grounded via a superconducting quantum interference device (SQUID),

wherein the SQUID is configured to be threaded by an external magnetic flux that introduces an internal variable in the superconducting circuit.

Other features and advantages of the invention will be apparent upon reading the detailed description and reviewing the accompanying drawings of the figures.

## Detailed Description of the Invention

Various embodiments of the invention are further described in more detail with reference to the accompanying drawings of the figures. However, the invention may be embodied in many other forms and should not be construed as limited to any certain structure or function discussed in the following description.

According to the description, it will be apparent to the ones skilled in the art that the scope of the invention encompasses any embodiment thereof, which is disclosed herein, irrespective of whether this embodiment is implemented independently or in concert with any other embodiment of the invention. For example, the method disclosed herein may be implemented in practice by using any numbers of the embodiments provided herein. Furthermore, it will be understood that any embodiment of the invention may be implemented using one or more of the elements presented in the appended claims.

The object of the present invention is to provide a scalable quantum memristive device that can be used in superconducting circuits whose response can be controlled via microwave driving and that can serve as the building block for quantum neuromorphic architectures such as quantum neural networks.

This object is achieved by the invention.

## 1) Classical memristors

The memristor (resistor with memory) is a two terminal electrical device whose resistance depends on the history of charges crossing through the material. It can be described using a state-dependent Ohm's law and is characterized by pinched hysteretic responses, which can be explained using Kubo's response theory proposed in 1957. The device was first proposed as the fourth circuit element by L. Chua in 1971, and its experimental demonstration using doped semiconductors by HP labs led to several proposals for memristor-based neuromorphic computing.

In neuromorphic computing, memristors have been utilized to construct and accelerate devices such as neural networks due to their memory effects and nonlinear dynamics that resemble neural synapses. This makes them relevant in the design of analog artificial neural networks. Additionally, memristors are not subject to the von Neumann bottleneck, a fundamental constraint on modern computers.

## 2) Memristive systems

Memristive systems are a generalization from the ideal model of memristors. A memristive system is characterized by its dynamical relation

$$y(t) = g[x, u, t]u(t), \qquad (1)$$

$$\dot{x} = f[x, u, t]. \qquad (2)$$

where $y(t)$ and $u(t)$ stand for the output and input signal of the system, respectively, and are related through the response function $g[x, u, t]$. The response function also depends on a state variable $x$ whose dynamics is described by an equation that can additionally depend on the input and time.

In the context of electrical circuits, when the input, $u(t)$, corresponds to current (voltage) and the output, $y(t)$, corresponds to voltage (current), the response function $g[x, u, t]$ is usually named memristance (memductance). The response function of a classical or quantum system is given using the Kubo formula, which can be derived using the linear response theory introduced in 1957 by R. Kubo.

## 3) Continuous feedback

Continuous feedback refers to the process of continuously monitoring the output of a physical system (i.e. a a collection of physical objects under study). This concept is central to maintaining stability and achieving desired behaviors in dynamic systems.

Continuous quantum feedback is a process where a quantum system is monitored in real-time, and the information obtained from this monitoring is used immediately to adjust the system's behavior. This approach aims to control and stabilize quantum states, based on weak measurements in order to conserve quantum properties. These weak measurements are performed to extract information about the quantum system using one or more of their observables.

## 4) Observable

An observable is a physical quantity (or, a variable) that can be measured. The observable may be, for example, position, linear or angular momentum, energy, mass, charge, or flux.

## 5) Quantum memristors

Quantum memristors are the quantum counterparts of classical memristors. They are characterized by a state-dependent Ohm's law between expectation values of quantum observables. Any device that satisfies these equations can be considered a quantum memristor, and they are not restricted to any specific platform. Proposals for quantum memristors have been made on various platforms, including photonics and superconducting circuits.

A quantum memristor can be defined analogously to their classical counterpart. One can consider observables $\langle\hat{y}(t)\rangle$ and $\langle\hat{u}(t)\rangle$ following the relations

$$\langle\hat{y}(t)\rangle = G[\langle x\rangle, \langle\hat{u}\rangle, t]\langle\hat{u}(t)\rangle \quad (3)$$

$$\langle\dot{\hat{x}}\rangle = F[\langle\hat{x}\rangle, \langle\hat{u}\rangle, t] \quad (4)$$

Here, $G[\langle\hat{x}\rangle, \langle\hat{u}\rangle, t]$ and $F[\langle\hat{x}\rangle, \langle\hat{u}\rangle, t]$ are the quantum analog to the response and state variable function, respectively.

Quantum memristors have been proposed in the platform of superconducting circuits and quantum photonics as a quantum dissipative system, whose decoherence mechanism is controlled by a continuous-measurement feedback scheme, responsible for the memory behavior. Using weak measurements and feedback, the response of the system can be engineered to become memristive.

Photonic quantum memristors has been experimentally realized using a setup consisting of Mach-Zehnder interferometer, phase shifters and using active feedback based on singlephoton detection to engineer the memristive response of the device. Scaling up such devices faces difficulties in the generation of single photon sources at larger scales, furthermore, applications require highly entangled input states which are also limited in scalability.

Currently there are no scalable proposals of quantum memristors that can reach beyond very few units. The proposals with superconducting circuits rely on several approximations that make it hard to be realized in the laboratory.

The invention relates in certain embodiments to a microwave quantum memristor device implemented using at least one superconducting circuit. The quantum memristor uses two coupled LC oscillators and a superconducting quantum interference device (SQUID), which can modify the effective frequency of one of the oscillators with an external magnetic flux modifying the dynamics of the other oscillator. The input signal of the device of the invention is an external voltage over one of the resonators, and the output signal is the response of the other resonator. Specifically, one can engineer memristive responses using different initial states, including separable and entangled states.

In another aspect, the invention pertains to a microwave quantum memristor as a building block of quantum neuromorphic architectures. This involves coupling at least two microwave quantum memristors using superconducting setups.

The invention also concerns a method to generate quantum correlations generated in the coupled system. This can be quantified using quantum discord to investigate the quantum correlations in the memristive subsystems.

In certain embodiments, the device comprises two LC oscillators, each of them with a capacitance $C_j$ and inductance $L_j$, and coupled by a capacitor $C_c$. Also, one of the resonators, labeled with $j = 2$, is coupled galvanically to a SQUID, which may, in certain embodiments, consists of a closed loop with two Josephson junctions. The SQUID behaves effectively as a Josephson junction with capacitance $C_J$ and tunable Josephson energy given by $2E_J|\cos(2\pi\Phi_x/\Phi_0)|$, which depends on the external magnetic flux $\Phi_x$ through the SQUID, where $\Phi_0 = h/(2e)$ is the superconducting magnetic flux quanta. In this design, the role of the SQUID is to change the cavity properties using the external magnetic $\Phi_x$ as feedback. Moreover, an input signal using a voltage source coupled capacitively is provided, as is shown in Fig. 1. The Lagrangian that describes the circuit reads

$$L = \frac{C_1}{2}\dot{\Phi}_1^2 - \frac{\Phi_1^2}{2L_1} + \frac{C_g}{2}\dot{\Phi}_1^2 - \frac{\Phi_1^2}{2L_1} + \frac{C_g}{2}\left(\dot{\Phi}_1 - V_g\right)^2 + \frac{C_c}{2}\left(\dot{\Phi}_1 - \dot{\Phi}_2\right)^2 + \frac{C_2}{2}\left(\dot{\Phi}_2 - \dot{\Phi}_3\right)^2 -$$

$$\frac{\left(\dot{\Phi}_2 - \dot{\Phi}_3\right)^2}{2L_2} + 2E_J\cos(\varphi_x)\cos(\varphi_3) \quad (5)$$

where $\varphi_3 = 2\pi\Phi_3/\Phi_0$ is the superconducting phase and $\varphi_x = 2\pi\Phi_x/\Phi_0$. Using the Legendre transformation and second quantization, the system Hamiltonian $\hat{H}$ is obtained as

$$\hat{H}(\Phi_x) = \sum_{l=1,2}\left[\omega_l(\Phi_x)\hat{a}_l^\dagger\hat{a}_l + iG_{g_l}(\Phi_x, V_g)\left(\hat{a}_l^\dagger - \hat{a}_l\right)\right] + \lambda^+(\Phi_x)\left(\hat{a}_1^\dagger\hat{a}_2 + \hat{a}_1\hat{a}_2^\dagger\right) +$$

$$\lambda^-(\Phi_x)\left(\hat{a}_1^\dagger\hat{a}_2^\dagger + \hat{a}_1\hat{a}_2\right) \quad (6)$$

where $\hbar = 1$ is used here. $\omega_l(\Phi_x)$ is the effective frequency of the $l$th resonator, which is modified by the presence of the external magnetic signal in the SQUID. $G_{gl}(\Phi_x, V_g)$ is the effect of the voltage source $V_g$ over each cavity, which also depends on the external flux $\Phi_x$ since it modifies the frequency of the resonators. The effective coupling strength between resonators, $\lambda^{\pm}(\Phi_x) = I_{12}(\Phi_x) \pm G_{12}(\Phi_x)$, consists of an inductive contribution, $I_{12}(\Phi_x)$, and a capacitive contribution, $G_{11}$ $(\Phi_x)$. All the coefficients in the Hamiltonian, H, can be controlled through the external flux $\Phi_x$. In some embodiments, one can use the high-plasma frequency and low impedance approximation, which allows to write $Q_3$ and $\Phi_3$ in terms of the other two charges and flux variables.

To analyze the memristive behavior of a memristor of the invention, one considers the input signal, the voltage in the node $V_g$, and the output signal as the signal in the node $\Phi_2$. The inventors studied the response of the dynamical variable in the node $\Phi_2$ considering quantum feedback through the SQUID based on weak measurements on the node $\Phi_1$. The initial state of the total system is $|\Psi(0)\rangle$. The feedback applied using the external magnetic flux is updated after a time $\Delta t$ according the flux update rule based on the dynamics of the observable $\langle\hat{\varphi}_1(t_j)\rangle$ as

$$\frac{\Phi_x^{(j)}}{\Phi_0} = c_1 - c_2\langle\hat{\varphi}_1(t_j)\rangle^2. \qquad (7)$$

where $c_1$ and $c_2$ are constants and $t_j = j\Delta t$. During the time windows $[t_j, t_{j+1}]$, the magnetic flux is constant and given by $\Phi_x^{(j)}$. To ensure continuous feedback, one may use the condition $\omega\Delta t \ll 1$ where $\omega$ is the input voltage frequency. This means the time window $\Delta t$ is smaller than the input voltage oscillation period, allowing fast updates and avoiding breaking the memristive response. In certain embodiments, one can also replace each LC oscillator, i.e. the first LC resonator, the second LC resonator, etc., with a coplanar waveguide resonator, considering only the fundamental mode, where weak measurements can be performed over microwave photons, and the measurement outcome can be used to provide analog quantum feedback.

This feedback process modifies the Hamiltonian of the system $\hat{H}\left(\Phi_x^{(j)}\right) \to \hat{H}\left(\Phi_x^{(j+1)}\right)$ conditional to the measuring the expectation value $\langle\hat{\varphi}_1(t_j)\rangle$. In this sense, $\langle\hat{\varphi}_1(t)\rangle$ corresponds to the internal variable $\langle\hat{x}\rangle$ of the memristive system. The input-output relation of the memristive system is given by the external voltage $V_g(t)$ and the observable on the node $\Phi_2$ i.e., $\langle\hat{n}_2(t)\rangle$.

The inventors analyzed the response of the observable $\langle\hat{n}_2(t)\rangle$ for particular initial states of the resonators by changing the frequency of the external voltage when it has the form $V_g(t) = V_0\cos(\omega_v t)$. The optimal parameter values for an embodiment of an uncoupled quantum memristor are summarized in Table 1 of Fig. 2.

## Coupled Devices

In certain embodiments of the invention, a plurality, for example, two microwave quantum memristors (devices) can be coupled using either a capacitor or an inductor. The result is a microwave quantum memristor that comprises at least two superconducting circuits that are coupled with each other, in particular using superconducting circuit elements such as an inductor and a capacitor, in particular using a coupling capacitor.

In some embodiments, a capacitor is used to connect the second node $(\Phi_2)$ of the first device, which corresponds to the memristive variable for several input states, to the input node $(\Phi_4)$ of the second device, as shown in Fig. 3. The second memristor is fed with a voltage that exhibits memristive features from the first device. To minimize crosstalk between the SQUIDs, the orientation of the second memristor may be changed in order to maximize the distance between the SQUIDs, as shown in Fig. 3. The Hamiltonian for the coupled circuit may be given by

$$\hat{H}_{2M} = \sum_{l=\{1,2\}} \left[\omega_l(\Phi_x)\hat{a}_l^{\dagger}\hat{a}_l + iG_{gl}(\Phi_x, t)\left(\hat{a}_l^{\dagger} - \hat{a}_l\right) + \Omega_l(\Phi_x)\hat{b}_l^{\dagger}\hat{b}_l + iJ_{gl}(\Phi_x, t)\left(\hat{b}_l^{\dagger} - \hat{b}_l\right)\right]$$
$$+ \lambda^+(\Phi_x)\left(\hat{a}_1^{\dagger}\hat{a}_2 + \hat{a}_1\hat{a}_2^{\dagger}\right) + \lambda^-(\Phi_x)\left(\hat{a}_1^{\dagger}\hat{a}_2^{\dagger} + \hat{a}_1\hat{a}_2\right) + \Lambda^+(\Phi_x)\left(\hat{b}_1^{\dagger}\hat{b}_2 + \hat{b}_1\hat{b}_2^{\dagger}\right)$$
$$+ \Lambda^-(\Phi_x)\left(\hat{b}_1^{\dagger}\hat{b}_2^{\dagger} + \hat{b}_1\hat{b}_2\right)$$

$$+\sum_{j,k=1}^{2}[\gamma_{j,k}^+(\Phi_x)(\hat{a}_j^{\dagger}\hat{b}_k + \hat{a}_j\hat{b}_k^{\dagger} + \gamma_{j,k}^-(\Phi_x)(\hat{a}_j^{\dagger}\hat{b}_k^{\dagger}) + \hat{a}_j\hat{b}_k)] \qquad (8)$$

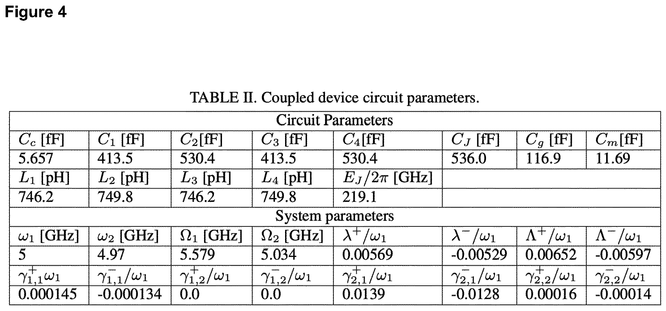

Here, $\hat{a}_l$ and $\hat{b}_l$ stand for the bosonic annihilation operators describing the memristive devices. $\omega_l(\Phi_x)$, $\Omega_l(\Phi_x)$ are the frequency of the resonator of each microwave memristor. Also, $G_{gl}(\Phi_x)$, and $J_{gl}(\Phi_x)$ corresponds to coupling strength between the resonators with the gate voltage. Moreover, $\lambda^{\pm}(\Phi_x)$ and $\Lambda^{\pm}(\Phi_x)$ are the coupling strength between the different nodes of the same quantum memristor, whereas $\gamma_{j,k}^{\pm}(\Phi_x)$ is the coupling strength between different devices. The optimal parameter values for an embodiment of coupled quantum memristors are summarized in Table 2 in Fig. 4.

**Engineering memristive response**

In some embodiments, the method to engineer memristive response in quantum devices based on superconducting circuits comprises utilizing suitable quantum computing elements and their coupling and providing means to implement continuous feedback in the system within suitable parameter ranges. Examples of such elements in superconducting circuits are resonators, inductors and capacitors, Josephson junctions and SQUIDs.

In some embodiments, the method uses continuous feedback on the memristor system that is based on information gathered from system's measurements to fine-tune the system's response to achieve a stable memristive behavior.

In one aspect, the invention refers to a method for designing a quantum memristive system in superconducting circuits as described above and herein.

Microwave driving is the application of microwave signals to manipulate and control the state of a quantum system.

Superconducting quantum circuits use Josephson junctions to realize qubits and their parallel connections to realize superconducting quantum interference devices (SQUIDs). Quantum computation with superconducting circuits exploits the intrinsic coherence of the superconducting state, into which all electrons are condensed. These systems are fabricated with thin film technology and operated at temperatures below 100 mK. Measurements are performed with integrated on-chip instruments via microwave driving. The access to macroscopic parameters allows tuning the system properties such as frequency and coupling strength and offers better scalability than other quantum platforms.

Quantization of superconducting circuits involves calculating the Lagrangian of the system, then using Hamilton's equation of motions to derive the classical Hamiltonian which is quantized by promoting the variables to quantum operators satisfying canonical commutation relations.

The circuit Hamiltonian is the Hamiltonian of the superconducting circuit architecture obtained after circuit quantization.

An expectation value is a mean value obtained after several repetitions of single experimental measurements of a physical quantity in a quantum experiment.

Continuous feedback is the process of actively steering a quantum system's evolution toward a desired state or behavior through the use of measurement and control techniques. It entails implementing feedback control based on the results of measurements to continuously monitor the quantum state of the system.

Quantum correlations refer to the non-classical connections that exist between quantum systems. Quantum correlations have been characterized and quantified using a variety of methods, these metrics try to account for various correlation-related properties, such as entanglement entropy, concurrence, or quantum discord. They offer quantitative methods for evaluating the magnitude and type of quantum correlations present in a particular system.

The quantum discord is a measure of quantum correlations, which quantifies quantum correlations beyond entanglement and is the difference between the mutual information and the classical correlations. It is given by the following equation

$$D_A(\rho_{AB}) = I(\rho_{AB}) - J_A(\rho_{AB}), \qquad (9)$$

where the mutual entropy is

$$I(\rho_{AB}) = S(\rho_A) + S(\rho_B) - S(\rho_{AB}), \qquad (10)$$

and the classical correlations are given by

$$J_A(\rho_{AB}) = S(\rho_A) - \max_{\Pi_i} S(\rho_{AVB}), \qquad (11)$$

where, $S(\rho_{AVB}) = \Sigma_i p_i Tr[\rho_{AVB} ln \rho_{AVB}]$ is the quantum conditional entropy, $\rho_{AVB} = p_i^{-1} \Pi_i \rho_{AB} \Pi_i$ is the state of A after performing a measurement on B, $p_i$'s are the probabilities given by $p_i = Tr[\Pi_i \rho_{AB} \Pi_i]$ and $\Pi_i$'s are the measurement basis.

Since this quantity is basis dependent we perform a maximization over the selected basis in order to pick the best measurement basis and obtain the optimum value.

The method for designing a microwave quantum memristor in superconducting circuits, in particular engineering a memristive response in a superconducting device, may comprise the design of the device using suitable superconducting elements and involving a SQUID for implementing external flux feedback, and determining suitable parameter ranges and frequency windows under which it can produce a memristive response.

The advantages of the microwave quantum memristor of the invention are at least the following:

1. Simple architecture consisting of fundamental superconducting elements.
2. The architecture allows for feasible coupling.
3. The architecture is scalable in 1D and 2D arrays.
4. In comparison to a photonic QM, single photon sources are not required.
5. In comparison to a photonic QM, entangled initial states are not necessary, since entanglement can be generated via coupling the microwave QMs.

**Figures**

The figures show:

**Figure 1:** Schematic representation of the circuit architecture of an embodiment of a memristive device involving microwave quantum photonics consisting of two LC resonators (a first LC resonator and a second LC resonator) with capacitances and inductances $C_l$ and $L_l$, respectively. The first LC resonator is grounded and coupled to the second through a coupling capacitor $C_c$, and an external voltage source $V_g$ via a gate capacitance $C_g$. Moreover, the second oscillator is connected to the grounded superconducting quantum interference device (SQUID), represented as a closed-loop with capacitance $\dfrac{C_J}{2}$ and Josephson energy $E_J$ threaded by an external flux $\Phi_x$. The memristive behavior in the second LC oscillator arises when the external flux is engineered conditionally to the measurement outcome of the first LC resonator.

**Figure 2:** Summary of the optimal parameters for an embodiment of a single quantum memristor obtained under Rotating wave approximation.

**Figure 3:** Schematic representation of an embodiment of the invention comprising the coupling of two microwave quantum memristors. The devices are coupled by a capacitor $C_m$ (red color, shown horizontally located in the middle of the figure) between them. The second node, $\Phi_2$ in the first device serves as the input signal to the second device.

**Figure 4:** Summary of the optimal parameters for an embodiment of the two coupled quantum memristors obtained under Rotating wave approximation and within state-of-the-art superconducting setups.

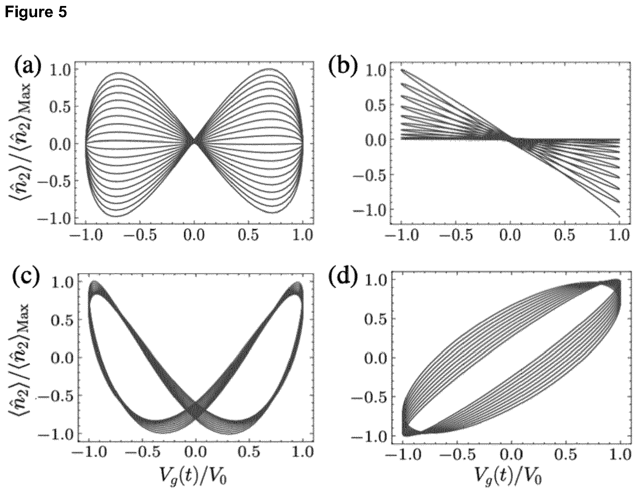

**Figure 5:** Dynamic response of an embodiment of a single microwave quantum memristor, using the plot of charge operator $\hat{n}_2$ under the action of the input voltage $V_g = V_0 cos(\omega_v t)$. The system is initialized in (a)-(b) vacuum state, $|\Psi(0)\rangle = |0\rangle \otimes |0\rangle$ and (c)-(d) cat state, $|\Psi(0)\rangle = (|\alpha, 0\rangle + |0, \alpha\rangle)/\sqrt{2}$ with $\alpha = re^{i\varphi}$. The driving frequency is (a)-(c) $\omega_v = \pi/5.92\,\omega_1$ and (b)-(d) $2\omega_v$ (high frequency). The simulations were performed using $V_0 = 0.01\mu V'$, and coupling strengths are $G_{12}/\omega_1 = 5.294 \times 10^{-3}$, $F_{12}/\omega_1 = 1.998 \times 10^{-4}$ for vacuum state; and for superposition states the couplings are $G_{12}/\omega_1 = 5.294 \times 10^{-3}$, $I_{12}/\omega_1 = 1.999 \times 10^{-4}$.

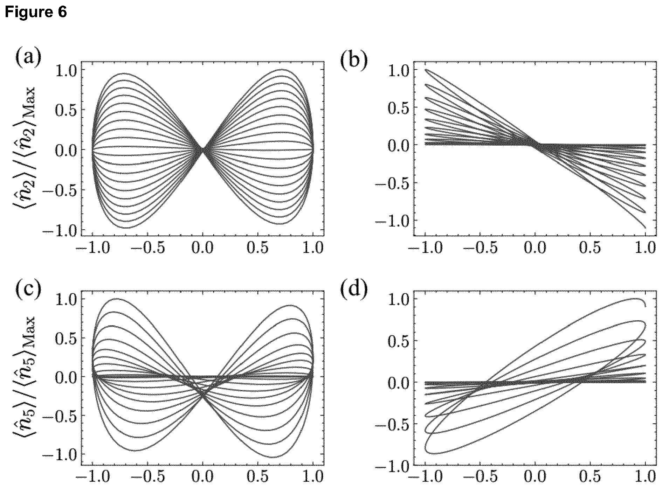

**Figure 6:** The dynamic response of the charge operators, $\hat{n}_2$ and $\hat{n}_5$ of the second and fourth resonators, respectively, was examined under the influence of the input voltage when the system is initialized in the Bell state $|\Psi(0)\rangle = |\psi_B|\psi_B\rangle$, with $\psi_B\rangle = (|0,0\rangle + |1,1\rangle)/\sqrt{2}$. The driving frequency is (a)-(c) $\omega_v = \pi/6.3\,\omega_1$ and, (b)-(d) $2\omega_v$ for the high-frequency response. Numerical simulations were conducted using the same system parameters as described for Figure 4.

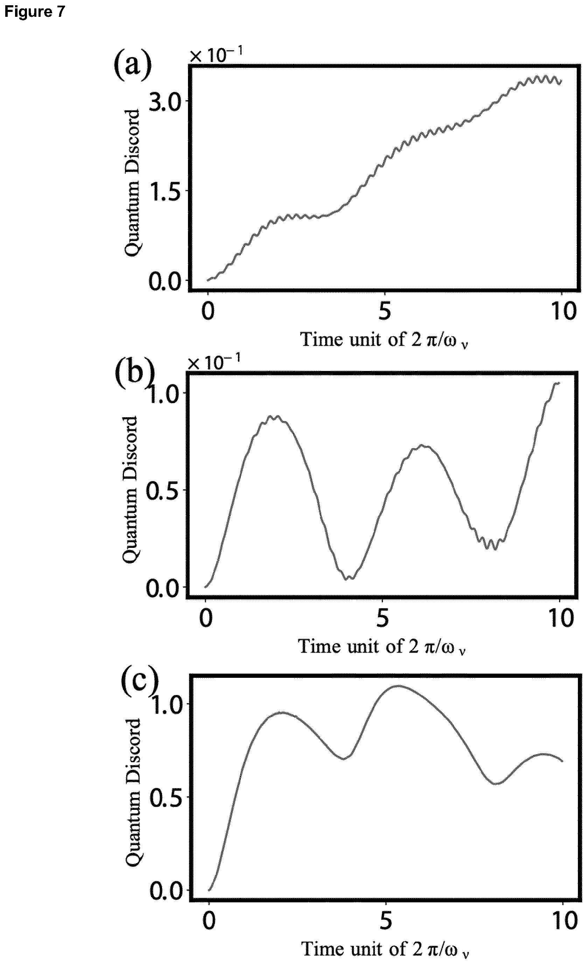

**Figure** 7: Quantum discord between different resonators of the coupled QMs in different initial states. $\rho_{ij}$ coresponds to the bipartite state of ith and jth resonator in the device. The initial states are (a) $|\Psi(0)\rangle = |0, \alpha\rangle|0, \alpha\rangle$ with

$$\alpha = \frac{\pi}{2} e^{\left\{\frac{i\pi}{2}\right\}}$$

, (b) $|\Psi(0)\rangle = |0, \alpha\zeta\rangle|0, \alpha\zeta\rangle$, where $\alpha = r\, e^{i\varphi}$, $\xi = r\, e^{i\varphi}$ (r = 0.1, $\varphi = \pi/8$), (c) $|\Psi(0)\rangle = |0, \psi(\pi/2,0)\rangle|0, \psi(\pi/2,0)\rangle$, where $|\psi(\pi/2,0)\rangle (|0\rangle + |1\rangle)/\sqrt{2}$.

**Reference Signs:**

Figure 1

$L_1$: Inductor 1
$L_2$: Inductor 2
$C_1$: Capacitor 1
$C_2$: Capacitor 2
$C_g$: Ground capacitor
$C_c$: Coupling capacitor
$V_g$: Input voltage
$\Phi_1$: magnetic flux at node 1 which serves as the internal variable of the quantum memristor.
$\Phi_2$: magnetic flux at second node, $\Phi_2$ in the first memristor circuit serves as the input signal to the second memristor circuit.
$\Phi_3$: magnetic flux at node 3
$\phi_x$: flux at the SQUID.
$E_J$: Energy of the Josephson junction of the SQUID.
$C_J$: Capacitance of the Josephson Junction

The quantum memristor circuit comprises the following elements: inductors, $L_1$ and $L_2$, capacitors $C_1$, $C_2$ and $C_c$ a SQUID with Josephson energy $E_J$ and capacitance $C_J$ and the magnetic flux $\Phi_1$, $\Phi_2$ and $\Phi_3$.

Figure 3

$L_1$: Inductor 1
$L_2$: Inductor 2
$C_1$: Capacitor 1
$C_2$: Capacitor 2
$C_g$: Ground capacitor
$C_c$: Coupling capacitor
$V_g$: Input voltage
$\Phi_1$: magnetic flux at node 1 which serves as the internal variable of the quantum memristor.
$\Phi_2$: magnetic flux at second node, $\Phi_2$ in the first memristor circuit serves as the input signal to the second memristor circuit.
$\Phi_3$: magnetic flux at node 3
$\Phi_4$: magnetic flux at node 4 which serves as the internal variable of the second quantum memristor.
$\Phi_5$: magnetic flux at second node 5.
$\Phi_6$: magnetic flux at second node 6.
$E_J$: Energy of the Josephson junctions
$C_J$: Capacitance of the Josephson Junction
$C_m$: Coupling capacitor to couple the two quantum memristors

The first memristor circuit comprises the following elements: inductors, $L_1$ and $L_2$, capacitors $C_1$, $C_2$ and $C_c$ a SQUID with Josephson energy $E_J$ and capacitance $C_J$ and the magnetic flux $\Phi_1$, $\Phi_2$ and $\Phi_3$.
The second memristor circuit comprises the following elements: inductors, $L_3$ and $L_4$, capacitors $C_3$, $C_4$ and $C_c$ a SQUID with Josephson energy $E_J$ and capacitance $C_J$ and the magnetic flux $\Phi_4$, $\Phi_5$ and $\Phi_6$. The two memristors are coupled through a capacitor $C_m$.

**Examples**

Single microwave quantum memristor

To prove the memristive response of a single microwave device, the inventors considered the initial state to be the vacuum state for both resonators $|\Psi(0)\rangle = |0\rangle \otimes |0\rangle$. Here, the expectation value for the observable of the second oscillator, namely, $\langle \hat{n}_2(t)\rangle$ and plot it as a function of the external voltage $V_g(t)$ for two different frequency values was evaluated. Figure 5(a) illustrates the evolution of the observable in relation to the external voltage, demonstrating the system's response (output versus input) of the device. For a specific input voltage frequency, $\omega_v = \pi/5.94\omega_1$, the curve exhibits a pinch at the origin, indicative of memristive behavior. This characteristic is a hallmark of the system. Conversely, for a different input voltage frequency, $2\omega_v$, it was assumed that the system operates within its high-frequency regime. In this regime, pinched hysteresis curves tend towards a linear response, akin to linear resistors. This behavior is observable in the expectation value of the charge, as depicted in Figure 5 (d). Therefore, it can be concluded that when the system is initialized in the vacuum state of each oscillator, the circuit exhibits a memristive response in the expectation value of the charge.

An additional scenario within the invention involves the cat state, defined as $|\Psi(0)\rangle = \dfrac{(|\alpha,0\rangle + |0,\alpha\rangle)/\sqrt{2}}{}$, where $\alpha = re^{i\varphi}$ represents the magnitude and orientation of the field displacement in both resonators. It should be noted that for this entangled state, the charge operator exhibits non-zero initial expectation values for both resonators. Figures 5 (c) and 5(d) depict the expectation value of the observable for an input voltage with a specific frequency, $\omega_v = \pi/5.9 \, \omega_1$, as previously described. A memristive response is observed in the observable of the second resonator. At high frequency, the dynamic response exhibits a circular pattern.

Through the dynamic characterization of the circuit, the emergence of stable pinched hysteresis curves associated with memristive behavior can be identified, as observed in the case of vacuum, bell, and NOON states. Conversely, for superposition, coherent, and squeezed states, the charge operator of the second resonator exhibits a pinched hysteresis loop at normal frequency. This indicates the capability of the device to function as a memory device.

**Coupled microwave quantum memristor**

The design of a single quantum memristor can be extended to a 1D array, as demonstrated by the coupling of two microwave quantum memristors. An analysis of the dynamic response of the memristive variable of the coupled device, corresponding to the second oscillator of each subsystem, labeled as $(L_2, C_2)$ and $(L_4, C_4)$, reveals this capability. Furthermore, it was assumed that both devices are initialized in the same state as the single case, utilizing the feedback function specified in Eq. 9.

The evolution of the subsystem is examined over the timescale $T = 10(2 \, \pi/\omega_v)$, with $\omega_v$ representing the driving frequency of the input voltage. The coupling capacitance, denoted as $C_m$, modifies the frequency of both subsystems, resulting in a modification of the conditions necessary for the input voltage to induce memristive behavior in both devices.

Figure 6 illustrates the plot of the expectation value of the charge in relation to the input voltage, which is common to both Quantum Memristors (QMs). The initial state for both QMs is the Bell state $|\Psi(0)\rangle = |\psi_B\rangle|\psi_B\rangle\rangle$, where

$$|\psi_B\rangle = (|0,0\rangle + |1,1\rangle)/\sqrt{2}$$

and the driving frequency is $\omega_v = \pi/6.3 \, \omega_1$. In this scenario, the charge operator exhibits pinched hysteresis curves, with the first device exhibiting greater stability than the second. In the high-frequency regime ($2\omega_v$), $\langle \hat{n}_l \rangle$ approximates a linear response. This confirms that coupled devices are capable of preserving their memristive behavior with modifications to the drive frequencies.

The generation of quantum correlations within the system was investigated through the measure of quantum discord, which corresponds to the difference between mutual information and classical correlations. Quantum discord is defined as:

$$Q\left(\rho_{r_2,r_4}\right) = S\left(\rho_{r_2}\right) - \min_{\Pi_{r_4}^j} S\left(\rho_{r_2,r_4 \lor r_2}\right), \tag{12}$$

This equation provides information about the bipartition formed by the second and fourth resonators following measurement of the latter, where $S(\rho) = Tr[\rho log(\rho)]$ represents the von Neumann entropy. The second term corresponds to the classical entropy, defined as the optimization over all possible projective measurements, $\Pi_{r_4}^{j}$, acting on resonator

$r_4$. These measurements are parameterized as $Pi_{r_4}^{j} = I_{r_2} \otimes U|j\rangle\langle j|U^{\dagger}$, representing rotated projective measurements on the canonical basis.

Figure 7 shows the evolution of the quantum correlation of coupled devices for various initial states, over a timescale denoted as $T = 10(2\pi/\omega_v)$. Larger values of quantum correlations can be achieved when the system is initiated in either a superposition state or correlated input states, such as the Bell or NOON state, as depicted in Fig.7(a)-(c). It is observed that entangled inputs stabilize the memristive features of the device while generating correlations between the memristive variables.

## Claims

1. A microwave quantum memristor with at least one superconducting circuit, comprising:

   - a first LC resonator, and
   - a second LC resonator,

   which are

   galvanically coupled to each other, and
   both coupled to a voltage source via a capacitor,

   wherein

   - the first LC resonator is grounded via a capacitance, and
   - the second LC resonator is grounded via a superconducting quantum interference device (SQUID) for changing the properties of the second LC resonator depending on an external magnetic signal applied to the SQUID which is tuned based on continuous quantum measurements.

2. Microwave quantum memristor of claim 1, wherein the external magnetic signal is received by the superconducting quantum interference device (SQUID) and is a function of the voltage measured in the first LC resonator.

3. Microwave quantum memristor of claim 1 or 2, wherein

   the first LC resonator carries out the continuous quantum measurements and
   the second LC resonator functions as an output port for analyzing a response of the memristor.

4. Microwave quantum memristor of any of claims 1 to 3, wherein the superconducting quantum interference device (SQUID) is implemented to provide a flux feedback to the second LC resonator.

5. Microwave quantum memristor according to any of claims 1 to 4, wherein a continuous quantum feedback is provided based on the continuous quantum measurements performed on the first LC resonator through a magnetic flux that is applied to the superconducting quantum interference device (SQUID), which in turn provides tuning to the second LC resonator.

6. Microwave quantum memristor according to claim 5, wherein the continuous quantum feedback is based on a flux update rule which is a function depending on the dynamics of the first LC resonator's quantum observables.

7. Microwave quantum memristor according to claim 5 or 6, wherein the continuous quantum feedback is applied through the superconducting quantum interference device (SQUID) after a time interval on the second LC resonator such that a time interval is smaller than an input voltage oscillation period for tuning the response of the memristor.

8. Microwave quantum memristor according to any of claims 5 to 7, wherein the continuous quantum feedback modifies a quantum Hamiltonian depending on the measurement value received from the second LC resonator.

9. Microwave quantum memristor according to any of claims 1 to 8, wherein an initial state is chosen from the group consisting of vacuum, superposition, coherent, squeezed, Bell, NOON and cat states, in particular wherein the response of the microwave quantum memristor is adjusted by changing the relative phase of the initial state.

10. Microwave quantum memristor according to any of claims 1 to 9, comprising at least two superconducting circuits that are coupled with each other, in particular using superconducting circuit elements such as an inductor and a capacitor, in particular using a coupling capacitor.

11. Microwave quantum memristor according to claim 10, wherein the at least two superconducting circuits are coupled with each other such that a node of the first superconducting circuit is coupled to a node of the second superconducting circuit.

12. Microwave quantum memristor according to any of claims 10 or 11, wherein the coupling leads to the generation of quantum correlations (in the system) that can be quantified by using quantum discord, entanglement entropy and/or concurrence.

13. Microwave quantum memristor according to claim 11 or 12, wherein the response of the coupled microwave quantum memristor is adjusted

   - by using an initial state selected from the group consisting of vacuum, superposition, coherent, squeezed coherent, Bell, NOON and cat states and/or
   - by changing the relative phase of the initial state.

14. A method for providing a memristive relation in a quantum memristor, comprising:
introducing an external magnetic field through a quantum interference device (SQUID) which depends on a current in a first LC resonator thereby changing an effective frequency of a second LC resonator which in turn changes the distribution of a voltage signal into the first LC resonator, thereby generating a feedback relation.

15. Use of a microwave quantum memristor according to any of claims 1 to 14 in a quantum computer.

**Figure 1**

**Figure 2**

TABLE I. Optimal circuit parameters

| Circuit Parameters | | | | | | | |
|---|---|---|---|---|---|---|---|
| $C_c$ [fF] | $C_1$ [fF] | $C_2$[fF] | $C_J$ [fF] | $C_g$ [fF] | $L_1$ [pH] | $L_2$ [pH] | $E_J/2\pi$ [GHz] |
| 5.657 | 413.5 | 530.4 | 536 | 116.9 | 746.2 | 749.8 | 219.1 |
| System parameters | | | | | | | |
| $\omega_1$ [GHz] | $\omega_2$ [GHz] | $\omega_S$ [GHz] | $G_{12}/\omega_1$ | $I_{12}/\omega_1$ | $Z_1/Z_S$ | $Z_2/Z_S$ | $\omega_S/\omega_1$ |
| 5 | 5 | 50 | 0.005 | 0.00005 | 9.999 | 9.999 | 10 |

**Figure 3**

**Figure 4**

TABLE II. Coupled device circuit parameters.

| Circuit Parameters | | | | | | | |
|---|---|---|---|---|---|---|---|
| $C_c$ [fF] | $C_1$ [fF] | $C_2$[fF] | $C_3$ [fF] | $C_4$[fF] | $C_J$ [fF] | $C_g$ [fF] | $C_m$[fF] |
| 5.657 | 413.5 | 530.4 | 413.5 | 530.4 | 536.0 | 116.9 | 11.69 |
| $L_1$ [pH] | $L_2$ [pH] | $L_3$ [pH] | $L_4$ [pH] | $E_J/2\pi$ [GHz] | | | |
| 746.2 | 749.8 | 746.2 | 749.8 | 219.1 | | | |
| System parameters | | | | | | | |
| $\omega_1$ [GHz] | $\omega_2$ [GHz] | $\Omega_1$ [GHz] | $\Omega_2$ [GHz] | $\lambda^+/\omega_1$ | $\lambda^-/\omega_1$ | $\Lambda^+/\omega_1$ | $\Lambda^-/\omega_1$ |
| 5 | 4.97 | 5.579 | 5.034 | 0.00569 | -0.00529 | 0.00652 | -0.00597 |
| $\gamma_{1,1}^+\omega_1$ | $\gamma_{1,1}^-/\omega_1$ | $\gamma_{1,2}^+/\omega_1$ | $\gamma_{1,2}^-/\omega_1$ | $\gamma_{2,1}^+/\omega_1$ | $\gamma_{2,1}^-/\omega_1$ | $\gamma_{2,2}^+/\omega_1$ | $\gamma_{2,2}^-/\omega_1$ |
| 0.000145 | -0.000134 | 0.0 | 0.0 | 0.0139 | -0.0128 | 0.00016 | -0.00014 |

**Figure 5**

**Figure 6**

(a)

(b)

(c)

(d)

**Figure 7**

Europäisches
Patentamt

European
Patent Office

Office européen
des brevets

# EUROPEAN SEARCH REPORT

Application Number

EP 24 15 4282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHUBHAM KUMAR ET AL: "Entangled Quantum Memristors", ARXIV.ORG, CORNELL UNIVERSITY LIBRARY, 201 OLIN LIBRARY CORNELL UNIVERSITY ITHACA, NY 14853, 8 December 2021 (2021-12-08), XP091111008, * abstract * * page 1, left-hand column, line 1 - page 6, right-hand column, last line * * page 7, line 5 - page 11, line 15 * | 1-15 | INV. G06N10/40 ADD. G06N10/60 |
| A | KUMAR S ET AL: "Tripartite Entanglement in Quantum Memristors", PHYSICAL REVIEW APPLIED, vol. 18, no. 3, 1 September 2022 (2022-09-01), XP093173020, US ISSN: 2331-7019, DOI: 10.1103/PhysRevApplied.18.034004 Retrieved from the Internet: URL:https://arxiv.org/pdf/2201.10309> * abstract * * page 1, left-hand column, line 1 - page 8, last line * | 1-15 | |
| X,P | X-Y QIU ET AL: "Microwave Quantum Memristors", ARXIV.ORG, CORNELL UNIVERSITY LIBRARY, 201 OLIN LIBRARY CORNELL UNIVERSITY ITHACA, NY 14853, 12 November 2023 (2023-11-12), XP091656987, * abstract * * page 1, left-hand column, line 1 - page 8, right-hand column, last line * * page 0, line 8 - page 13, last line * | 1-15 | TECHNICAL FIELDS SEARCHED (IPC) G06N |

The present search report has been drawn up for all claims

| Place of search | Date of completion of the search | Examiner |
|---|---|---|
| The Hague | 24 June 2024 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)